# EUROPÄISCHE PATENTSCHRIFT

(11) **EP 2 456 584 B1**
(45) Veröffentlichungstag und Bekanntmachung des Hinweises auf die Patenterteilung: **26.08.2015**
(21) Anmeldenummer: 10702257.6
(22) Anmeldetag: 01.02.2010
(51) Int. Cl.: B23B 29/20

(54) **AUSRICHTVORRICHTUNG**
ALIGNMENT DEVICE
DISPOSITIF D'ALIGNEMENT

(30) Priorität: 18.07.2009 DE 102009033805
(43) Veröffentlichungstag der Anmeldung: 30.05.2012
(73) Patentinhaber: Sauter Feinmechanik GmbH, 72555 Metzingen (DE)
(72) Erfinder: SAHM, Detlef, 73669 Lichtenwald (DE)
(74) Vertreter: Bartels, Martin Erich Arthur
(86) Internationale Anmeldenummer: PCT/EP2010/000578
(87) Internationale Veröffentlichungsnummer: WO 2011/015253

(56) Entgegenhaltungen:
- EP-A1- 1 992 435
- DE-A1-102005 045 662
- DE-C1- 19 958 461

## Beschreibung

Die Erfindung bezieht sich auf eine Ausrichtvorrichtung zum ausrichtenden und lösbaren Festlegen mindestens einer Funktionskomponente, insbesondere in Form eines Werkzeughalters, an einer weiteren Funktionskomponente, insbesondere in Form einer Werkzeugscheibe, entlang mindestens einer Ausrichtachse, wobei die beiden Funktionskomponenten jeweils mindestens eine Anlagefläche für die gegenseitige Anlage miteinander aufweisen, wobei sowohl die eine als auch die weitere Funktionskomponente mindestens ein Ausrichtteil aufweisen, wobei das jeweilige Ausrichtteil der einen Funktionskomponente Bestandteil eines Ausrichtkörpers ist und eine Ausrichtfläche bildet, die mit einer Positionierfläche des zuordenbaren Ausrichtteils der weiteren Funktionskomponente mit einer vorgebbaren Ausrichtkraft in zumindest teilweise Anlage bringbar ist, der Ausrichtkörper ein eigenständiges, quaderförmiges Bauteil ausgebildet ist und an seinen freien, gegenüberliegenden Endbereichen jeweils ein Ausrichtteil mit der Ausrichtfläche aufweist.

Dahingehende Werkzeugscheiben werden in der industriellen Fertigung bei sogenannten Werkzeugrevolvern von Werkzeugmaschinen eingesetzt. Sind mehrere Werkzeughalter mit zugehörigen Werkzeugen (beispielsweise feststehende Drehmeißel oder antreibbare Fräswerkzeuge) über den Umfang der Werkzeugscheibe angebracht, so erlaubt eine solche Anordnung durch Drehen einen sehr schnellen Wechsel der für die jeweilige Bearbeitung erforderlichen Werkzeuge. Da bei der Bearbeitung von Werkstücken regelmäßig nur sehr geringe Fertigungstoleranzen zugelassen sind, ist für einen sinnvollen Einsatz derartiger Werkzeugrevolver eine wiederholbar definierte Positionierung der Werkzeughalter und damit der Werkzeuge bezüglich der Werkzeugscheibe unerlässlich.

Aus der EP 0 962 280 B1 ist eine Ausrichteinrichtung für die relative Lageeinstellung eines Werkzeughalters gegenüber einer Werkzeughalteraufnahme bei Werkzeugmaschinen in Form einer Schwenkbewegung mit einem Ausrichtteil, das mit einem Einstellteil zusammenwirkt, bekannt, wobei das Einstellteil mit einem Aufnahmegehäuse versehen ist, indem entgegen der Wirkung eines Kraftspeichers längsverschiebbar ein Führungsteil für das Ausrichtteil geführt ist und wobei das Führungsteil über ein Betätigungsteil ansteuerbar ist. Bevorzugt ist bei der bekannten Lösung vorgesehen, dass das zapfenförmige Ausrichtteil fest an der Werkzeughalteraufnahme der Werkzeugscheibe und das Einstellteil fest an dem zu positionierenden Werkzeughalter angeordnet sind. Mit der bekannten Lösung ist über ein einzelnes Betätigungsteil wirksam der Einstell- und Ausrichtvorgang von Hand für den Werkzeughalter vornehmbar.

Aus der WO 2007/031145 A1 ist ein Werkzeugrevolver, insbesondere für Werkzeugmaschinen bekannt, mit einer um eine Revolverachse drehbaren Werkzeugscheibe, die eine Mehrzahl von entlang ihres Umfanges verteilten Werkzeugstationen aufweist, die durch Drehen der Werkzeugscheibe jeweils in mindestens eine Arbeitsposition einstellbar sind, wobei an zumindest einem Teil der Werkzeugstationen eine Aufnahme für einen Werkzeughalter vorhanden ist und jeweils eine Befestigungseinrichtung vorgesehen ist, um einen jeweiligen Werkzeughalter an einer betreffenden Aufnahme in definierter Positionierung festzulegen. Dadurch, dass bei der bekannten Lösung zur Positionierung als Ausrichtmittel zumindest ein aus der Aufnahme vorstehender, senkrecht zu dieser elastisch nachgiebiger Passkörper, sowie in einer Grundfläche des Werkzeughalters vertiefte Passflächen zur Zusammenwirkung mit dem zumindest einen Passkörper vorgesehen sind, ist bei der bekannten Lösung erreicht, dass bei Befestigen des Werkzeughalters an der Werkzeugstation mit der Befestigungseinrichtung die gewünschte Einstellposition eingenommen wird.

Aus der bisher unveröffentlichten deutschen Patentanmeldung der gleichen Anmelderin DE 10 2008 048 206.4 ist eine Lösung bekannt, bei der die elastisch nachgiebigen Passkörper in der Art eines "Inserts" ausgebildet und in einer Aufnahmefläche der Werkzeugscheibe derart integriert sind, dass der jeweilige Passkörper wiederum aus der Insert-Aufnahme der Werkzeugscheibe vorsteht. Die elastische Nachgiebigkeit für den Passkörper ist über eine Schlitzgestaltung in einem den Insert bildenden Spreizkörper realisiert, der den elastischen Träger für den Passkörper ausbildet.

Die DE 10 2005 045 662 A1 zeigt einen Werkzeugrevolver auf, bei dem der Werkzeughalter über eine am Werkzeugrevolver befindliche Platte ausrichtbar ist. Die Platte weist vorstehende Nocken auf, die Anlageflächen für den Werkzeughalter umfassen.

Aus der EP 1 992 435 A1 geht eine Werkzeughalterpositionierungsvorrichtung hervor. Zur präzisen Ausrichtung des Werkzeughalters gegenüber einer Werkzeugscheibe sind am Werkzeughalter vorspringende Abschnitte ausgebildet, die in korrespondierende Ausnehmungen in der Werkzeugscheibe beim Positionieren eingreifen. Die vorspringenden Abschnitte sind mit zwei seitlichen, entgegengesetzt verlaufenden Schlitzen versehen, die sich in Richtung auf den Werkzeughalter zu und von diesem Weg erstrecken und im eingebauten Zustand des Werkzeughalters keine Vorspannkraft auf die Werkzeugscheibe ausüben.

Durch die DE 199 58 461 C1 gehört eine Werkzeugspanneinrichtung zum Stand der Technik, bei der am Werkzeughalter eine Druckplatte vorgesehen ist, die seitlich an einer Leiste des Werkzeugrevolvers zur Anlage gebracht werden kann.

Mit den zuletzt genannten bekannten beiden Lösungen lässt sich eine relativ genaue Positionierung von zwei Funktionskomponenten in Form eines Werkzeughalters gegenüber einer Werkzeugscheibe realisieren.

Ausgehend von diesem Stand der Technik stellt sich die Erfindung die Aufgabe eine Ausrichtvorrichtung bereitzustellen, welche, wie im genannten Stand der Technik aufgezeigt, eine genaue relative Positionierung von zwei Funktionskomponenten, wie einem Werkzeughalter und einer Werkzeugscheibe, gewährleistet und sich darüber hinaus durch eine einfache, kostengünstige sowie funktionssichere Bauweise auszeichnet.

Erfindungsgemäß ist diese Aufgabe durch eine Ausrichtvorrichtung gelöst, die die Merkmale des Patentanspruches 1 in seiner Gesamtheit aufweist.

Erfindungsgemäß ist vorgesehen, dass der Ausrichtkörper als quaderförmiges und leistenförmiges Bauteil konzipiert ist, das von der Oberseite her in Richtung auf die weitere Funktionskomponente von einer Nut durchgriffen ist und die nach unten hin in eine Brücke als Verbindungssteg ausmündet, der parallel zu zwei Leistenkörpern sich über die Gesamtlänge des Ausrichtkörpers erstreckt und eine Biegegelenkstelle ausbildet, über die der eine Leistenkörper unter elastischer Auslenkung um diese Biegestelle auf den anderen Leistenkörper zustellbar ist, dass die vorgebbare Ausrichtkraft durch die Vorspannung gebildet ist, die durch eine beim aneinander Festlegen der Funktionskomponenten erfolgende elastische Auslenkung des die jeweilige Ausrichtfläche bildenden Teiles relativ zum übrigen Teil des Ausrichtkörpers erzeugt ist, dass der leistenförmige Ausrichtkörper unter Bildung von zwei miteinander zusammenhängenden Leistenkörpem geschlitzt ist und dass der eine, das jeweilige Ausrichtteil aufweisende Leistenkörper relativ zu dem anderen Leistenkörper, der mit der einen Funktionskomponente mittels einer Verbindungseinrichtung verbindbar ist, gegen Elastizitätskraft auslenkbar ist.

Dies ist beispielsweise dadurch erreicht, dass der Schlitz zwischen den zwei miteinander zusammenhängenden Leistenkörpern so tief ausgeführt ist, dass sich zwischen den beiden Leistenkörpem eine elastisch verformbare Brücke einstellt.

Dadurch, dass sowohl die eine als auch die andere Funktionskomponente mindestens ein Ausrichtteil aufweist, die in paarweisem Wirkzusammenhang miteinander gebracht eine relative Positionierung der beiden Funktionskomponenten um mindestens die eine Ausrichtachse vornehmen, ist eine definierte relative Positionierung einer Funktionskomponente, insbesondere in Form eines Werkzeughalters, an einer weiteren Funktionskomponente, insbesondere einer Werkzeugscheibe, gewährleistet. Dadurch, dass die eine sowie die andere Funktionskomponente bereits die für die relative Positionierung notwendigen Ausrichtmittel aufweisen, kann man im Wesentlichen ohne zusätzliche Positionierhilfen, wie beispielhaft in der EP 0 962 280 B1 aufgezeigt, auskommen.

Bei Ausführungsbeispielen, bei denen das jeweilige Ausrichtteil, das der einen Funktionskomponente zuordenbar ist, Bestandteil eines eigenständigen Ausrichtkörpers ist, kann die Fertigung der Ausrichtkörper, welche eine hohe Präzision erfordert, losgelöst von der Fertigung der einen Funktionskomponente erfolgen, und es ist eine geringere Vorratshaltung an Funktionskomponenten notwendig, da nur die bei einem Arbeitsprozess notwendigen einen Funktionskomponenten mit Ausrichtkörpern versehen werden müssen. Insbesondere lassen sich die dahingehenden Ausrichtkörper auch bei bereits bestehenden Systemen sinnfällig nachrüsten.

Dadurch, dass die jeweilige Ausrichtfläche der einen Funktionskomponente mit einer Positionierfläche des Ausrichtteils der weiteren Funktionskomponente mit einer vorgebbaren Ausrichtkraft in zumindest teilweise Anlage bringbar ist, wobei die vorgebbare Ausrichtkraft durch eine Vorspannung gebildet ist, die durch eine elastische Auslenkung des die jeweilige Ausrichtfläche bildenden Teiles des Ausrichtkörpers erzeugt ist, wird auf sichere Weise die Relativlage der einen Funktionskomponente bezüglich der weiteren Funktionskomponente erreicht, beispielsweise um die senkrecht zur Achse eines Werkzeugrevolvers verlaufende Ausrichtachse.

Bei der erfindungsgemäßen Lösung lässt sich der Ausrichtkörper als integrierter Bestandteil mindestens einer der beiden Funktionskomponenten ausgestalten; vorzugsweise ist jedoch vorgesehen, die Ausrichtkörper als Anbaukörper für die jeweils eine Funktionskomponente in Form des Werkzeughalters auszugestalten, um dergestalt auch bereits im Markt bestehende Systeme nachrüsten zu können.

Der jeweilige Ausrichtkörper ist leistenförmig ausgebildet und weist an seinen freien, gegenüberliegenden Endbereichen jeweils ein Ausrichtteil mit der Ausrichtfläche auf. Durch das Vorsehen eines Paares von Ausrichtteilen an dem leistenförmigen Ausrichtkörper reicht es für das Vorsehen von vier, diametral zur Ausrichtachse angeordneten Ausrichtkörpern an der einen Funktionskomponente aus, zwei derartige Ausrichtkörper an der einen Funktionskomponente, beispielsweise an gegenüberliegenden Seiten der einen Funktionskomponente, anzubringen.

Bei einem bevorzugten Ausführungsbeispiel erfolgt die Verbindung des jeweiligen Ausrichtteils mit der einen Funktionskomponente lösbar durch eine Verbindungseinrichtung. Hierbei kann für die Verbindungseinrichtung beispielhaft vorgesehen sein, dass ein in eine Bohrung des Ausrichtteils eingebrachter Schraubenschaft in eine zughörige Gewindebohrung der einen Funktionskomponente eindrehbar ist und durch Anlage des Schraubenkopfes an einem Abschnitt des Ausrichtteils ein Anpressen des Ausrichtteils an die Funktionsgruppe gewährleistet ist.

Bei einem weiteren Ausführungsbeispiel ist das Ausrichtteil des Ausrichtkörpers durch eine Nocke gebildet, welche in der Funktionsstellung sich von dem Ausrichtkörper in Richtung der Anlagefläche der anderen Funktionskomponente erhebt. Die im Querschnitt vorzugsweise dreieckförmig ausgebildete Nocke liegt mit einer Seite der Dreiecksform an dem Ausrichtkörper an während die freie Spitze des Dreiecks in Richtung der Anlagefläche der anderen Funktionskomponente weist. An einer der beiden freiliegenden Seiten der dreiecksförmigen Nocke sind hierbei die Ausrichtflächen vorgesehen. Die Ausrichtflächen können hierbei jeweils in einer Ebene verlaufen oder ballig ausgeführt sein.

Bei einer bevorzugten Ausführungsform ist vorgesehen, dass das jeweilige Ausrichtteil der weiteren Funktionskomponente mit seiner Positionierfläche, vorzugsweise einstückiger Bestandteil dieser Funktionskomponente ist und dass die jeweilige Positionierfläche sich in Richtung einer Vertiefung angeordnet zwischen zwei Anlageflächen der weiteren Funktionskomponenten erstreckt. Alternativ oder ergänzend hierzu kann vorgesehen sein das jeweilige Ausrichtteil der weiteren Funktionsgruppe randseitig an einem quer zur Richtung der Achse des Werkzeugrevolvers ausgebildeten Rand der Anlagefläche der weiteren Funktionskomponente vorzusehen.

Bei einem bevorzugten Ausführungsbeispiel der Erfindung sind die Ausrichtfläche und die Positionierfläche eines Paares an Ausrichtteilen als Schrägflächen gleicher Neigung ausgebildet. Bei einem weiteren bevorzugten Ausführungsbeispiel der Erfindung weist die Ausricht- und/oder die Positionierfläche eine ballige Kontur auf.

Bei einem bevorzugten Ausführungsbeispiel ist vorgesehen, dass die eine Funktionskomponente mit einem Halteteil die Anlagefläche der weiteren Funktionskomponente durchgreifend, in diese eingreift und in ihrer Funktionsstellung mittels einer lösbaren Verriegelungseinrichtung derart festgelegt ist, dass die paarweise zusammenwirkenden Ausrichtteile unter Vorspannung aneinander gehalten sind. Beispiele für dahingehende Halteteile und lösbare Verriegelungseinrichtungen sind Präzisionsschnittstellen nach DIN 69880.

Bei einem besonders bevorzugten Ausführungsbeispiel ist die Vorspannung, unter der in der Funktionsstellung die Ausrichtteile aneinander gehalten sind, derart gewählt, dass die paarweise an dem einen Leistenkörper angeordneten Ausrichtmittel mit ihren Ausrichtflächen gegenüber den zugeordneten Positionierflächen der Ausrichtteile der weiteren Funktionskomponente eine Neigung erfahren, die diesen Leistenkörper auf den anderen Leistenkörper in einer Schräglage zustellt.

Nachstehend ist die Erfindung anhand von in der Zeichnung dargestellten Ausführungsbeispielen im Einzelnen erläutert. Es zeigen:
- Fig. 1: eine perspektivisch, abgebrochen und auseinander gezogen gezeichnete Schrägansicht eines Umfangsabschnitts der Werkzeugscheibe eines Werkzeugrevolvers, wobei ein Werkzeughalter in von der Aufnahme an der Werkzeugscheibe abgehobener Stellung dargestellt ist;
- Fig. 2: eine perspektivisch und abgebrochen gezeichnete Schrägansicht eines Umfangsabschnitts der Werkzeugscheibe mit an der Werkzeugscheibe angeordnetem Werkzeughalter;
- Fig. 3: eine Seitenansicht in Richtung der Achse des Werkzeugrevolvers eines Umfangsabschnitts der Werkzeugscheibe mit an der Werkzeugscheibe angeordnetem Werkzeughalter;
- Fig. 3a: einen vergrößerten Ausschnitt des mit X umrandeten Kreises in der Fig.3, der die gegenseitige Lage eines einander zugeordneten Paares von Ausrichtteilen des Werkzeughalters und der Werkzeugscheibe darstellt;
- Fig. 4: eine Seitenansicht in einer Richtung quer zur Achse des Werkzeugrevolvers mit einem in einem Umfangsabschnitt der Werkzeugscheibe angeordneten Werkzeughalter; wobei hier der Zustand vor dem eigentlichen Befestigen des Werkzeughalters an der Werkzeugscheibe dargestellt ist;
- Fig. 4a: einen vergrößerten Ausschnitt des in Fig.4 mit Y umrandeten Kreises; und
- Fig. 4b: eine der Fig. 4a ähnliche Darstellung; jedoch für den Zustand, dass der Werkzeughalter an der Werkzeugscheibe festgelegt ist.

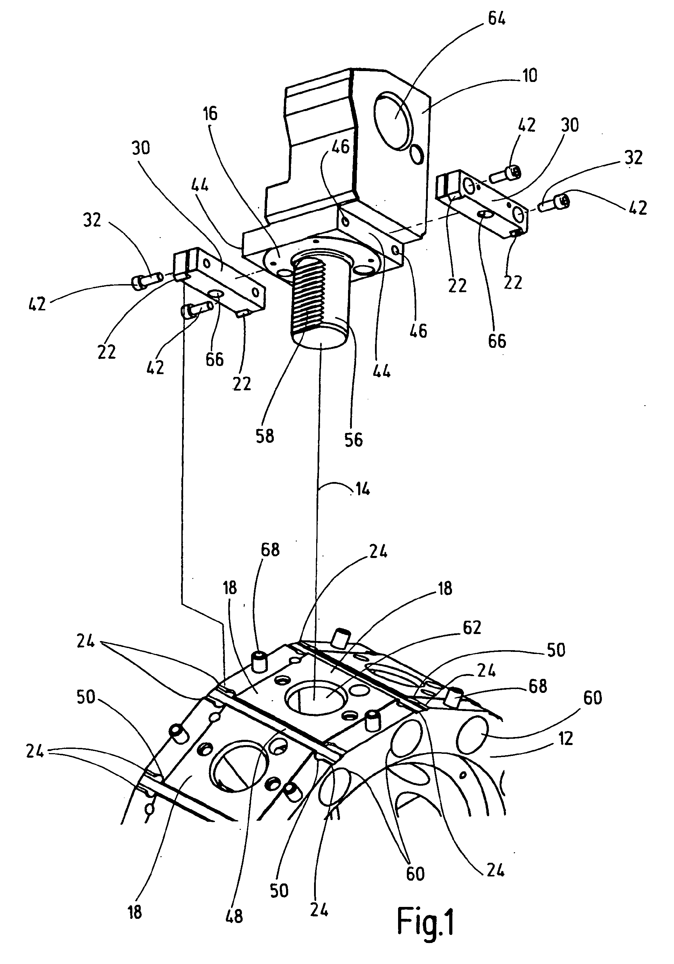

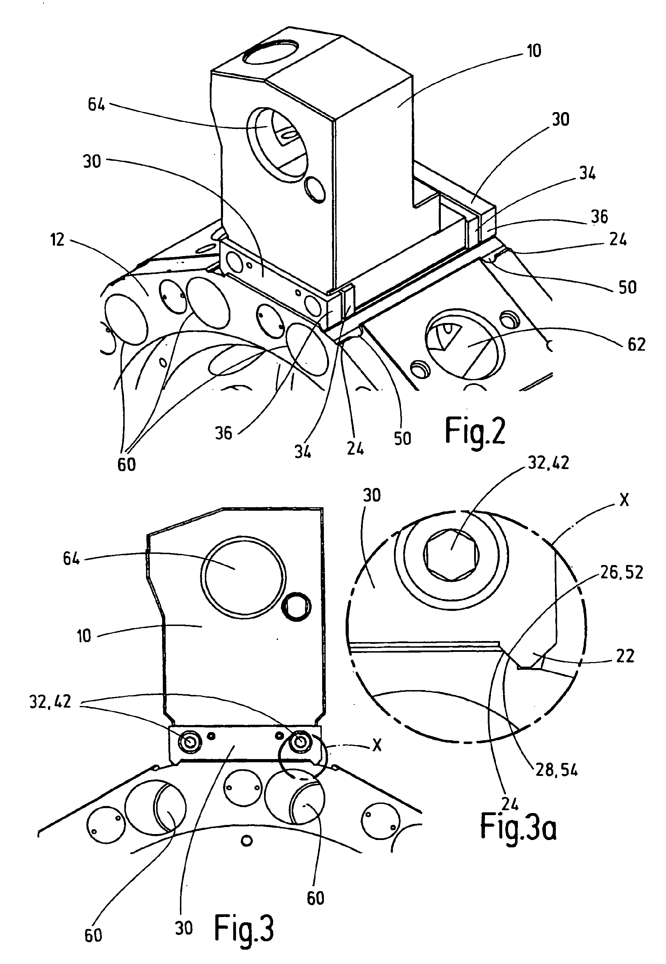

Fig.1 zeigt in der Art einer Explosionsdarstellung die erfindungsgemäße Ausrichtvorrichtung zum ausrichtenden und lösbaren Festlegen mindestens einer Funktionskomponente 10, insbesondere in Form eines Werkzeughalters an einer weiteren Funktionskomponente 12 in Form einer Werkzeugscheibe um mindestens eine Ausrichtachse 14, die in Blickrichtung auf die Fig.1 gesehen sich in einer vertikalen Ausrichtung erstreckt. Die beiden genannten Funktionskomponenten im Umfang des Werkzeughalters 10 sowie der Werkzeugscheibe 12 weisen auf ihren einander benachbart zugewandten Seiten jeweils eine Anlagefläche 16,18 auf für die gegenseitige Anlage im miteinander festgelegten Zustand, wie dies beispielhaft in der Fig.2 dargestellt ist.

Außerhalb der jeweiligen Anlagefläche 16,18, die sich im übrigen senkrecht zu der Ausrichtachse 14 erstrecken, weist sowohl die eine als auch die weitere dahingehende Funktionskomponente Ausrichtteile 22,24 auf, die in paarweisem Wirkzusammenhang miteinander gebracht (vgl. Fig.2) eine relative Positionierung der beiden Funktionskomponenten in Form des Werkzeughalters 10 gegenüber der Werkzeugscheibe 12 um mindestens die eine Ausrichtachse 14 vornehmen.

Das jeweilige Ausrichtteil 22 des Werkzeughalters 10 weist dabei eine Ausrichtfläche 26 auf, die mit einer vorgebbaren Ausrichtkraft in zumindest teilweiser Anlage mit einer Positionierfläche 28 des zuordenbaren Ausrichtteils 24 der Werkzeugscheibe 12 als weiterer Funktionskomponente bringbar ist (s. hierzu auch Fig.3,3a). Wie sich des weiteren aus der Fig.1 ergibt, sind insgesamt vier Paare an Ausrichtteilen 22,24 diametral zu der einen vertikal verlaufenden Ausrichtachse 14 angeordnet, die die jeweilige Anlagefläche 16,18 randseitig begrenzen. Auf diese Art und Weise läßt sich eine gute Winkelausrichtung des Werkzeughalters 10 gegenüber der Aufnahme der Werkzeugscheibe 12 um die genannte Hochachse 14 im Feinjustierbereich erreichen.

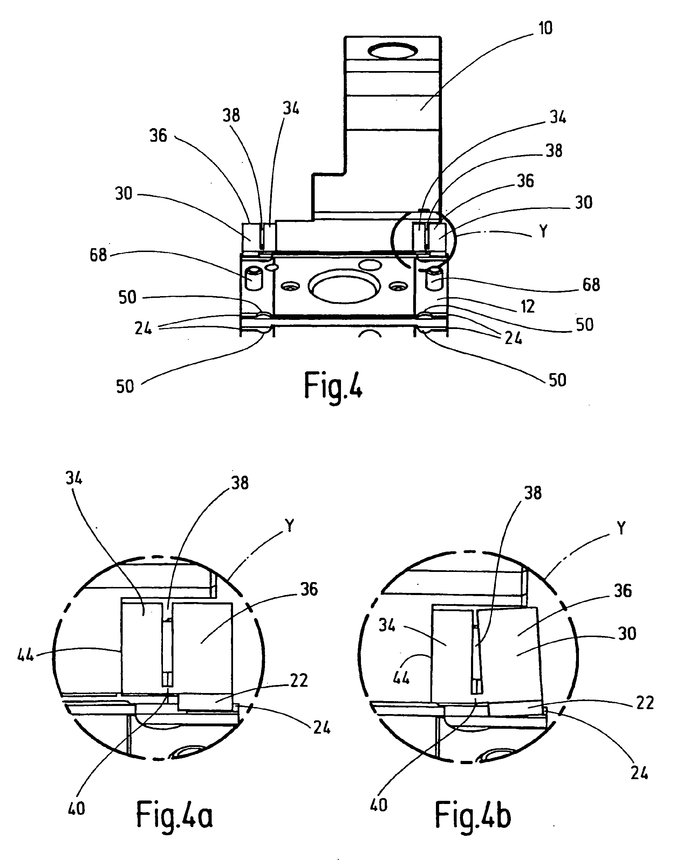

Das jeweilige Ausrichtteil 22, das dem Werkzeughalter 10 als Funktionskomponente zuordenbar ist, ist Bestandteil eines eigenständigen Ausrichtkörpers 30, der mit dem Werkzeughalter 10 mittels einer Verbindungseinrichtung 32 verbindbar ist. Der jeweilige Ausrichtkörper 30 ist leistenförmig ausgebildet und weist an seinen freien gegenüberliegenden Endbereichen jeweils das Ausrichtteil 22 mit der Ausrichtfläche 26 auf. Der leistenförmige Ausrichtkörper 30 ist unter Bildung von zwei miteinander verbundenen Leistenkörpern 34,36 geschlitzt ausgeführt, wobei der eine das jeweilige Ausrichtteil 22 aufweisende Leistenkörper 36 relativ zu dem anderen Leistenkörper 34, der mit dem Werkzeughalter 10 verbindbar ist, in gewissem Maße bewegbar ist (vgl. Fig.4a,4b). Der Ausrichtkörper 30 ist als quaderförmiges Bauteil konzipiert, das von der Oberseite her von einer Nut 38 durchgriffen ist, die in Blickrichtung auf die Fig.4a,4b gesehen nach unten hin in eine Art Brücke 40 als Verbindungssteg ausmündet, der parallel zu den beiden Leistenkörpern 34,36 sich über die Gesamtlänge des Ausrichtkörpers 30 erstreckt und eine Art Biegegelenkstelle ausbildet, über die der Leistenkörper 36 unter elastischer Auslenkung um diese Biegestelle auf den Leistenkörper 34 zustellbar ist. Für den dahingehenden Zustellvorgang weist die Verbindungseinrichtung 32 jeweils paarweise wirkende Eingriffsschrauben 42 auf, die den jeweiligen Ausrichtkörper 30 derart durchgreifen, dass der jeweilige Schraubenkopf der Eingriffsschraube 42 in ausschließliche Anlage mit dem ersten Leistenkörper 34 kommt, um dergestalt den ersten Leistenkörper 34 in plane Anlage mit einer jeweils zugeordneten Aufnahmefläche 44 des Werkzeughalters 10 zu bringen, wobei die genannten Schrauben 42 mit ihrer Gewindestrecke dann in Eingriff befindlich sind mit zuordenbaren Gewinden 46 im Werkzeughalter 10 (vgl. Fig.1). Insoweit ist also die Durchgriffsbohrung für die jeweilige Eingriffsschraube 42 im zuzustellenden zweiten Leistenkörper 36 größer gehalten als der Durchmesser des Schraubenkopfes, um dergestalt einen hemmfreien Eingriff der Schraube 42 in die zugeordneten Gewinde 46 im Werkzeughalter 10 zu ermöglichen.

Das jeweilige Ausrichtteil 24 der Werkzeugscheibe 12 als der weiteren Funktionskomponente ist mit seiner Positionierfläche 28 einstückiger Bestandteil der Werkzeugscheibe 12, wobei die jeweilige Positionierfläche 28 sich in Richtung einer Vertiefung 48 angeordnet zwischen zwei benachbarten Anlageflächen 18 der Werkzeugscheibe 12 erstreckt. Die jeweilige Vertiefung 48 ist dabei in der Art einer Längsnut ausgebildet, die sich von der vorderen Stirnseite der Werkzeugscheibe zu ihrer rückwärtigen Seite erstreckt. Die Ausrichtteile 24 begrenzen die jeweilige Vertiefung 48 in Ihrem freien, nach außen hin mündenden Endbereich, wobei durch Aussparungen 50 das jeweilige Ausrichtteil 24 von der sonstigen Längsführung der Vertiefung 48 ausgespart ist, um dergestalt bei dem paarweise Aneinanderliegen der Ausrichtteile 22,24 geometrische Überbestimmungen zu vermeiden. Es soll mithin sichergestellt werden, dass jedenfalls die einander zugeordneten Ausrichtteile 22,24 in direkte Anlage miteinander kommen und sich nicht an sonstigen Drittbauteilen abstützen können. Hierfür ist, wie dies insbesondere die Fig.3 und 3a zeigen, weiter vorgesehen, dass die Ausrichtfläche 26 und die zugeordnete Positionierfläche 28 eines Paares an benachbarten Ausrichtteilen 22,24 als Schrägflächen 52,54 gleicher Neigung ausgebildet sind. Bei einer bevorzugten Ausgestaltung kann auch vorgesehen sein, dass zumindest die eine Schrägfläche 52 einen leicht balligen Verlauf aufweist, um dergestalt eine Flächenberührung mit der weiteren Schrägfläche 54 zu ermöglichen.

Wie des Weiteren die Fig.1 zeigt, weist die erste Funktionskomponente in Form des Werkzeughalters 10 in der Mitte der insoweit kreisrund ausgebildeten Anlagefläche 16 einen zapfenförmig nach unten vorstehenden Halter als Halteteil 56 auf, das dem Betrachter zugewandt über eine Verzahnungsfläche 58 verfügt, in die ein korrespondierendes Klemmstück mit seiner Verzahnung (nicht dargestellt) eingreifen kann, das über eine Zuführbohrung 60 zugeführt und entsprechend verschraubt das Halteteil 56 in Blickrichtung auf die Fig.1 nach unten gesehen in die zugehörige Aufnahme 62, die die Anlagefläche 18 mittig durchgreift, zieht um eine feste Anlage des Halters 10 an der Werkzeugscheibe 12 zu erreichen, wie dies beispielhaft in der Fig.2 dargestellt ist. Der dahingehende Verriegelungseingriff ist üblich und beispielsweise Gegenstand der DIN 69880. Mit Anziehen der Verriegelungseinrichtung wird über das Halteteil 56 in hohem Maße eine Anzugskraft auf den Halter 10 in Richtung der Werkzeugscheibe 12 ausgeübt, so dass unter hohem Anpreßdruck die beiden korrespondierenden Anlageflächen 16,18 miteinander in Anlage kommen unter Einbezug der paarweise zusammenwirkenden Ausrichtteile 22,24, wobei dann das Ausrichtteil 24 der Werkzeugscheibe 10 das insoweit über die Anlagefläche 18 in Richtung der Vertiefung 48 eingreifende Ausrichtteil 22 anhebt mit der Folge, dass gemäß der Darstellung nach der Fig.4b der Leistenkörper 36 eine Zustellbewegung auf den Leistenkörper 34 erfährt, so dass über die dann vorgespannte Brücke 40 eine als Ausrichtkraft wirkende Vorspannung sich einstellt mit der Folge, dass in Verschieberichtungen quer zur Ausrichtachse 14 gleichfalls eine Positionierung, diesmal in eingefederter Weise, erfolgt.

Dadurch, dass die paarweise an dem Leistenkörper 36 angeordneten Ausrichtteile 22 mit ihren Ausrichtflächen 26 gegenüber den zugeordneten Positionierflächen 28 der Ausrichtteile 24 der Werkzeugscheibe 12 eine Neigung erfahren, die diesen Leistenkörper 36 auf den anderen Leistenkörper 34 zustellt, kommt es zwischen den genannten Flächen 26,28 zu einer Schräglage in Richtung gesehen auf die beiden miteinander in Anlage befindlichen Anlageflächen 16,18, so dass im Bereich der Ausrichtteile die flächige Anlage reduziert ist mit der Folge einer erhöhten Flächenpressung, was zum einen die Justierkräfte erhöht.

Gemäß Darstellung nach der Fig.1 ist das Halteteil 56 als massiver Eingriffszapfen ausgebildet, so dass dem Werkzeughalter 10 insoweit die Funktion der Aufnahme eines feststehenden Werkzeuges (nicht dargestellt) zukommt, das beispielsweise in der Art eines Drehmeißelhalters in eine Halteraufnahme 64 des Halters 10 aufnehmbar ist. Es ist jedoch auch ohne weiteres möglich, bei einer nicht näher dargestellten Ausführungsform das Halteteil 56 als Durchgriffsmöglichkeit für eine Antriebswelle eines Drehwerkzeuges auszugestalten, wie dies beispielsweise in der Fig.1 der EP 0 962 280 B1 gezeigt ist. Des weiteren können die Ausrichtteile 22 in Form des Ausrichtkörpers 30 einteiliger Bestandteil des Werkzeughalters 10 sein; bevorzugt ist jedoch vorgesehen, die dahingehenden Ausrichtkörper 30 als sog. Nachrüstteil auszubilden, d.h. wie dargestellt können die Ausrichtkörper 30 an bereits bestehende, ausgelieferte Werkzeugscheibensysteme nachgerüstet werden. Für die dahingehende Nachrüstung weist Ausrichtkörper 30 in etwa mittig an der Unterseite des zuvorderst angeordneten Leistenkörpers 36 eine Mittenbohrung 66 auf, die im Durchmesser größer gehalten ist als ein Aufnahme- oder Einrichtzapfen 68, der sich an den Stirnseiten der Werkzeugscheibe 12 angeordnet mittig mit Überstand zwischen zwei benachbarten nutförmigen Vertiefungen 48 erstreckt und der Aufnahme eines federzentrierten Ausrichtteils dient, wie dies ebenfalls Gegenstand der Ausrichteinrichtung nach der EP 0 962 280 B1 ist. Insoweit läßt sich dieses bekannte System durch das neue Leistenkörper-System ohne weiteres in austauschender Weise ersetzen.

## Patentansprüche

1. Ausrichtvorrichtung zum ausrichtenden und lösbaren Festlegen mindestens einer Funktionskomponente (10), insbesondere in Form eines Werkzeughalters, an einer weiteren Funktionskomponente (12), insbesondere in Form einer Werkzeugscheibe, um mindestens eine Ausrichtachse (14), wobei die beiden Funktionskomponenten (10, 12) jeweils mindestens eine Anlagefläche (16,18) für die gegenseitige Anlage miteinander aufweisen, wobei sowohl die eine als auch die weitere Funktionskomponente (10,12) mindestens ein Ausrichtteil (22,24) aufweisen, wobei das jeweilige Ausrichtteil (22) der einen Funktionskomponente (10) Bestandteil eines Ausrichtkörpers (30) ist und eine Ausrichtfläche (26) bildet, die mit einer Positionierfläche (28) des zuordenbaren Ausrichtteils (24) der weiteren Funktionskomponente (12) mit einer vorgebbaren Ausrichtkraft in zumindest teilweise Anlage bringbar ist, der Ausrichtkörper (30) als ein eigenständiges, quaderförmiges Bauteil ausgebildet ist und an seinen freien, gegenüberliegenden Endbereichen jeweils ein Ausrichtteil (22) mit der Ausrichtfläche (26) aufweist, **dadurch gekennzeichnet, dass** der Ausrichtkörper (30) als leistenförmiges Bauteil konzipiert ist, das von der Oberseite her in Richtung auf die weitere Funktionskomponente (12) von einer Nut (38) durchgriffen ist und die nach unten hin in eine Brücke (40) als Verbindungssteg ausmündet, der parallel zu zwei Leistenkörpern (34, 36) sich über die Gesamtlänge des Ausrichtkörpers (30) erstreckt und eine Biegegelenkstelle ausbildet, über die der eine Leistenkörper (36) unter elastischer Auslenkung um diese Biegestelle auf den anderen Leistenkörper (34) zustellbar ist, dass die vorgebbare Ausrichtkraft durch die Vorspannung gebildet ist, die durch eine beim aneinander Festlegen der Funktionskomponenten (10,12) erfolgende elastische Auslenkung des die jeweilige Ausrichtfläche (26) bildenden Teiles (36) relativ zum übrigen Teil (34) des Ausrichtkörpers (30) erzeugt ist, und dass der eine, das jeweilige Ausrichtteil (22) aufweisende Leistenkörper (36) relativ zu dem anderen Leistenkörper (34), der mit der einen Funktionskomponente (10) mittels einer Verbindungseinrichtung (32) verbindbar ist, gegen Elastizitätskraft auslenkbar ist.

2. Ausrichtvorrichtung nach Anspruch 1, **dadurch gekennzeichnet, dass** mindesten zwei Paare, vorzugsweise jedoch vier Paare an Ausrichtteilen (22,24) diametral zu dereinen Ausrichtachse (14) angeordnet sind.

3. Ausrichtvorrichtung nach Anspruch 1 oder 2, **dadurch gekennzeichnet, dass** das jeweilige Ausrichtteil (24) der weiteren Funktionskomponente (12) mit seiner Positionierfläche (28) vorzugsweise einstückiger Bestandteil dieser Funktionskomponente (12) ist.

4. Ausrichtvorrichtung nach Anspruch 3, **dadurch gekennzeichnet, dass** die jeweilige Positionierfläche (28) in Richtung einer Vertiefung (48) angeordnet sich zwischen zwei benachbarten Anlageflächen (18) der weiteren Funktionskomponente (12) erstreckt.

5. Ausrichtvorrichtung nach einem der Ansprüche 1 bis 4, **dadurch gekennzeichnet, dass** die Ausrichtfläche (26) und die Positionierfläche (28) eines Paares an Ausrichtteilen (22,24) als Schrägflächen (52, 54) gleicher Neigung oder als mit gleicher Krümmung gewölbte Flächen ausgebildet sind.

6. Ausrichtvorrichtung nach einem der vorausgehenden Ansprüche, **dadurch gekennzeichnet, dass** die eine Funktionskomponente (10) mit einem Halteteil (56), die Anlagefläche (18) der weiteren Funktionskomponente (12) durchgreifend, in diese eingreift und in ihrer Funktionsstellung mittels einer lösbaren Verriegelungseinrichtung derart festgelegt ist, dass die paarweise zusammenwirkenden Ausrichtteile (22,24) unter einer Kraft aneinander gehalten sind, die die elastische Auslenkung der Ausrichtflächen (26) sowie die Vorspannung zwischen diesen und den Positionierflächen (28) erzeugt.

7. Ausrichtvorrichtung nach Anspruch 5, **dadurch gekennzeichnet, dass** die Vorspannung derart gewählt ist, dass die paarweise an dem einen Leistenkörper (36) angeordneten Ausrichtteile (22) mit ihren Ausrichtflächen (26) gegenüber den zugeordneten Positionierflächen (28) der Ausrichtteile (24) eine Neigung erfahren, die diesen Leistenkörper (36) auf den anderen Leistenkörper (34) in einer Schräglage zustellt.

## Claims

1. An alignment device for aligned and detachable securing of at least one functional component (10), in particular in the form of a tool holder, on another functional component (12), in particular in the form of a tool disc, around at least one alignment axis (14), the two functional components (10, 12) each having at least one contact surface (16,18) for mutual contact with one another, both one and also the other functional component (10, 12) having at least one alignment part (22, 24), the respective alignment part (22) of the one functional component (10) being a component part of an alignment body (30) and forming an alignment surface (26) which can be moved into at least partial contact with one positioning surface (28) of the assignable alignment part (24) of the other functional component (12) with a definable alignment force, the alignment body (30) being made as an independent, cuboid component part and having a respective alignment part (22) with the alignment surface (26) on its free, opposite end regions, **characterised in that** the alignment body (30) is designed as a strip-shaped component through which a groove (38) passes from the top towards the other functional component (12) and which discharges downward into a bridge (40) as a connecting brace which extends parallel to two strip bodies (34, 36) over the entire length of the alignment body (30) and forms a bending articulation via which the one strip body (36) can be adjusted with elastic deflection around this bending site to the other strip body (34), that the definable alignment force is formed by the preload which is produced by an elastic deflection of the part (36) which forms the respective alignment surface (26), which deflection takes place when the functional components (10, 12) are secured on one another, relative to the other part (34) of the alignment body (30), and that the one strip body (36), which has the respective alignment part (22), can be deflected against the elastic force relative to the other strip body (34) which can be connected to one functional component (10) by means of a connection device (32).

2. The alignment device according to Claim 1, **characterised in that** at least two pairs, but preferably four pairs of alignment parts (22, 24), are arranged diametrically to one alignment axis (14).

3. The alignment device according to Claim 1 or 2, **characterised in that** the respective alignment part (24) of the other functional component (12) with its positioning surface (28) is preferably an integral component of this functional component (12).

4. The alignment device according to Claim 3, **characterised in that** the respective positioning surface (28) located in the direction of a depression (48) extends between two adjacent contact surfaces (18) of the other functional component (12).

5. The alignment device according to any of Claims 1 to 4, **characterised in that** the alignment surface (26) and the positioning surface (28) of one pair of alignment parts (22, 24) are made as oblique surfaces (52, 54) of the same slope or as surfaces which are arched with the same curvature.

6. The alignment device according to any of the preceding claims, **characterised in that** the one functional component (10) with a retaining part (56), extending through the contact surface (18) of the other functional component (12), engages in the latter and in its functional position is secured by means of a detachable locking device such that the alignment parts (22, 24) which interact in pairs, are held on one another under a force which produces the elastic deflection of the alignment surfaces (26) and the preload between the latter and the positioning surfaces (28).

7. The alignment device according to Claim 5, **characterised in that** the preload is chosen so that the alignment parts (22), which are located in pairs on one strip body (26), with their alignment surfaces (26) relative to the assigned positioning surfaces (28) of the alignment parts (24), undergo a tilt which adjusts this strip body (36) to the other strip body (34) in an oblique position.

## Revendications

1. Dispositif d'alignement pour la fixation alignée et amovible d'au moins un élément (10) fonctionnel, notamment sous la forme d'un porte-outil, sur un autre élément (12) fonctionnel, notamment sous la forme d'un disque d'outil, autour d'au moins un axe (14) d'alignement, les deux éléments (10, 12) fonctionnels ayant respectivement au moins une surface (16, 18) d'appui pour l'appui mutuel entre eux, tant l'un des éléments (10, 12) fonctionnels que l'autre ayant au moins une partie (22, 24) d'alignement, la partie (22) respective d'alignement de l'un des éléments (10) fonctionnels faisant partie d'une pièce (30) d'alignement et formant une surface (36) d'alignement, qui peut être mise en appui, au moins en partie, avec une force d'alignement pouvant être prescrite, avec une surface (28) de positionnement de la partie (24) d'alignement pouvant être associée de l'autre élément (12) fonctionnel, la pièce (30) d'alignement étant constituée sous la forme d'une pièce parallélépipédique, indépendante et ayant, sur ses régions d'extrémité libres opposées, respectivement une partie (22) d'alignement ayant la surface (26) d'alignement, **caractérisé en ce que** la pièce (30) d'alignement est conçue sous la forme d'une pièce en forme de réglette, qui est traversée depuis le côté supérieur en direction de l'autre élément (12) fonctionnel par une rainure (38) et qui débouche vers le bas dans un pontet (40) comme barrette de liaison, qui s'étend parallèlement aux deux réglettes (34, 36) sur toute la longueur de la pièce (30) d'alignement et qui forme un point de joint articulé de flexion, par lequel l'une des réglettes (36) peut, avec excursion élastique autour de ce point de flexion, être mise sur l'autre réglette (34), **en ce que** la force d'alignement pouvant être prescrite est formée par la précontrainte, qui est produite par une excursion élastique, s'effectuant lors de la fixation l'un sur l'autre des éléments (10, 12) fonctionnels, de la partie (36), formant la surface (26) d'alignement respectif, par rapport à la partie (34) restante de la pièce (30) d'alignement et **en ce que** l'une des réglettes (36) ayant la partie (22) d'alignement respective peut, par rapport à l'autre réglette (34), qui peut être reliée à un élément (10) fonctionnel au moyen d'un dispositif (32) de liaison, être déviée à l'encontre d'une force d'élasticité.

2. Dispositif d'alignement suivant la revendication 1, **caractérisé en ce qu'**au moins deux paires, de préférence toutefois quatre paires, de parties (22, 24) d'alignement sont disposées diamétralement par rapport à l'axe (14) d'alignement.

3. Dispositif d'alignement suivant la revendication 1 ou 2, **caractérisé en ce que** la partie (24) d'alignement respective de l'autre élément (12) fonctionnel fait partie, par sa surface (28) de positionnement, de préférence d'une seule pièce, de cet élément (12) fonctionnel.

4. Dispositif d'alignement suivant la revendication 3, **caractérisé en ce que** la surface (28) de positionnement respective disposée en direction d'une cavité (48) s'étend entre deux surfaces (28) d'appui voisines de l'autre élément (12) fonctionnel.

5. Dispositif d'alignement suivant l'une des revendications 1 à 4, **caractérisé en ce que** la surface (26) d'alignement et la surface (28) de positionnement d'une paire de parties (22, 24) d'alignement sont constituées sous la forme de surfaces (52, 54) inclinées de même inclinaison ou de surfaces courbées de même courbure.

6. Dispositif d'alignement suivant l'une des revendications précédentes, **caractérisé en ce que** l'un des éléments (10) fonctionnels en traversant, par une partie (56) de maintien, la surface (18) d'appui de l'autre élément (12) fonctionnel y pénètre et est fixé dans sa position de fonctionnement au moyen d'un dispositif de verrouillage amovible, de manière à ce que les parties (22, 24) d'alignement, qui coopèrent par paire, soient maintenues l'une sur l'autre avec une force, qui produit l'excursion élastique des surfaces (26) d'alignement, ainsi que la précontrainte entre celles-ci et les surfaces (28) de positionnement.

7. Dispositif d'alignement suivant la revendication 5, **caractérisé en ce que** la précontrainte est choisie de manière à ce que les parties (22) d'alignement, disposées par paire sur l'une des réglettes (36), subissent, par leurs surfaces (26) d'alignement, par rapport aux surfaces (28) de positionnement associées des parties (24) d'alignement, une inclinaison, qui met cette réglette (36) en une position inclinée sur l'autre réglette (34).
